# EUROPEAN PATENT SPECIFICATION

(11) **EP 0 436 505 B1**
(45) Date of publication and mention of the grant of the patent: **09.08.1995**
(21) Application number: 91200416.5
(22) Date of filing: 29.06.1988
(51) Int. Cl.: B65H 55/00, B65H 55/04

(54) **Deep nested filament winding**
Tief eingelassene Fadenwicklung
Enroulement très compact de filaments

(30) Priority: 02.07.1987 US 69353
(43) Date of publication of application: 10.07.1991
(62) Divisional of application: 88305914.9
(73) Proprietor: Hughes Aircraft Company, Los Angeles, California 90045-0066 (US)
(72) Inventor: Lecompte, George W., Tucson, Arizona 85704 (US)
(74) Representative: Colgan, Stephen James

(56) References cited:
- EP-A- 0 207 844
- DE-C- 3 201 019
- FR-A- 717 497
- US-A- 2 734 695

## Description

This invention relates to a filament winding structure and technique and particularly to one that produces a densely packed and mechanically stable filament winding.

### Description of Related Art

Many modern weapon systems utilize a launched missile in which guidance information is transferred between it and a firing platform via a data link in the form of an electrical conductor or a fiber optic filament. Present weapon systems employing such techniques include the so-called TOW missile (i.e. Tube launched, Optically tracked, Wire guided missile). In order to provide adequate range for the guided projectile, it is necessary to store a very long length of wire or fiber optic filament within the weapon system. Typically, a winding is provided on a spool which pays out filament at an extremely high rate as the projectile is propelled toward the target.

A number of parameters must be considered in designing a winding of the type used to provide a data link for a guided missile. In order to provide efficient packaging, it is desirable to provide a winding which is dense and compact. Additionally, the winding should be structurally stable to enable it to retain its wound configuration during storage, handling and dispensing, thus eliminating or reducing the necessity of employing adhesives to maintain winding stability. Yet another objective in the design of such windings is to minimize filament payout drag. Another objective is to provide an improved spool for a filament having improved winding and payout facilities.

Most high speed filament dispensers now in use employ closely spaced precision windings in which each filament turn nests between turns of the previous layer. Because such designs will not maintain regular geometry if wound against a flat radial flange surface, each layer is stepped back several turns at its axial ends from the underlying layer to maintain winding stability. These winding techniques result in tapered winding ends which reduce the volumetric efficiency of the winding. Another disadvantage of some prior art winding techniques is high drag imposed during filament payout since the windings must be displaced in a radially outward direction a significant distance in order to clear other wraps as the filament is withdrawn from the winding.

EP-A-0 207 844 discloses a method of winding an optic fibre onto a spool in which the optic fibre is wound onto an intermediate bobbin, then rewound onto a tube with a step between turns which is greater than the diameter of the fibre. At the end of the first layer, the bobbin is passed through a hole in the tube. A second layer is then wound over the first.

FR-A-717 497 discloses a method of winding fibre onto a spool wherein each fibre turn is spaced from one another so as to leave a space between turns into which the fibre of the next layer is placed.

### SUMMARY OF THE INVENTION

An improved filament winding in accordance with this invention, as specified in claims 1,2 and 6 hereinafter, provides a filament winding which is volumetrically efficient, mechanically stable, and which features low payout drag. The windings are spaced apart a specific distance which results in layers of the filaments being deeply nested between filaments of the underlying layer of the winding, which provides stability and enables the filament to be wound against a flat radial flange.

Additional benefits and advantages of the present invention will become apparent to those skilled in the art to which this invention relates from the subsequent description of the preferred embodiments and the appended claims, taken in conjunction with the accompanying drawings.

### BRIEF DESCRIPTION OF THE DRAWINGS

FIG. 1 is a pictorial view of a winding in accordance with the prior art;
FIG. 2 is a pictorial view of a winding in accordance with a first exemplary prior art technique;
FIG. 3 is a partial cross-sectional view showing a modified construction of the winding shown in FIG. 1 having pitch control grooves;
FIG. 4 is a pictorial view of a deep nested filament winding in accordance with a first embodiment of this invention with a portion therein shown in cross section and a portion shown as a pictorial view;
FIG. 5 is a partial pictorial view and partial cross-sectional view of a deep nested filament winding in accordance with a second embodiment of this invention in which the pitch spacing is slightly reduced from that of the embodiment shown in FIG. 4; and
FIG. 6 is a cross-sectional view of a deep nested filament winding in accordance with a third embodiment of this invention wherein one axial end of the winding has a staggered configuration.

### DETAILED DESCRIPTION OF THE INVENTION

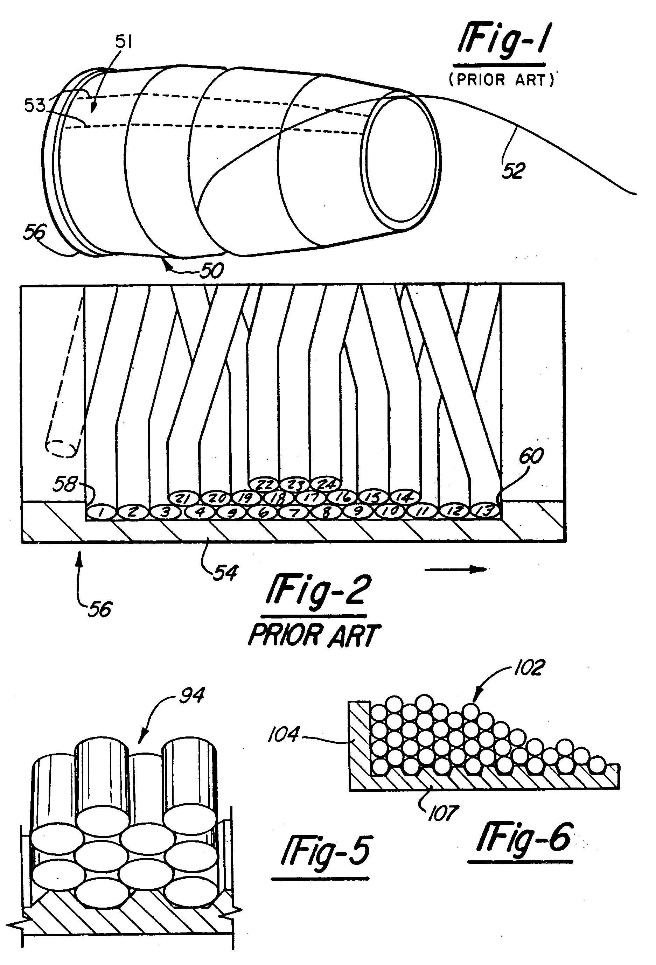

With particular reference to FIGS. 1 through 3, a precision filament windings according to the prior art will be described. These windings are particularly adapted to enable high speed payout of filament usable in connection with guided missile systems. These techniques are described to better illustrate the differences and advantages of the present invention as compared with the prior art. For several of the windings shown, the cross-sectional views of each of the turns of the filaments are numbered to show the order in which the winding wraps are developed.

FIG. 1 shows the general arrangement of a precision-wound filament dispenser 50 incorporating the prior art. The winding is done on tapered spool 56 to reduce the drag as filament 52 is drawn off over the end of the dispenser, which is rigidly fixed. Because alternate layers must be wound as right-hand and left-hand helixes, filament 52 cannot always remain nested between turns of the preceding layer, but must crossover the underlying filament twice per turn. Maintaining regular crossover geometry is an important element of precision filament winding.

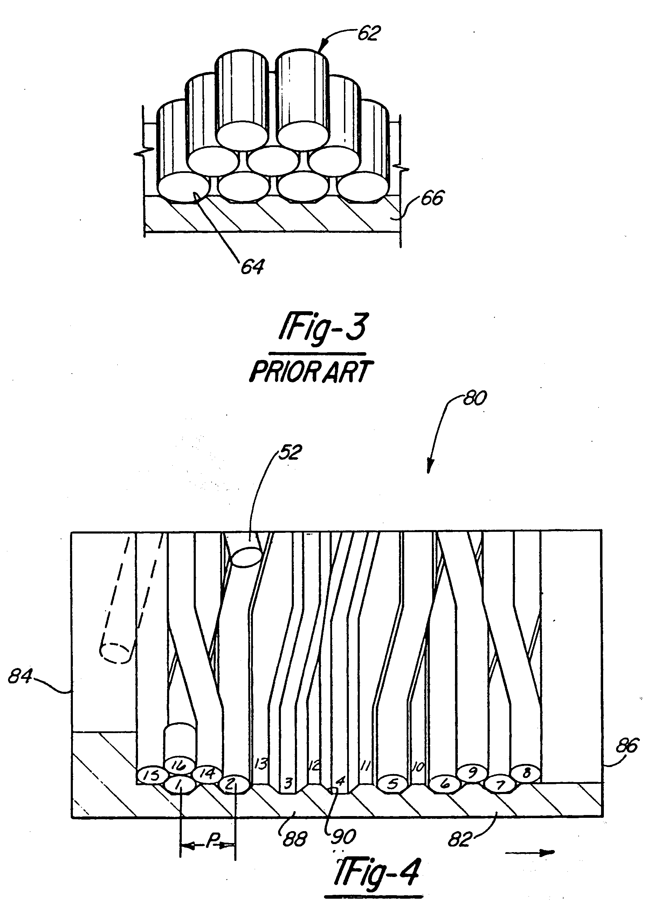

The area 51 in which the crossovers occur is illustrated as the area between dashed lines 53 extending the length of spool 56. The crossovers illustrated in FIG. 2 and FIG. 4 occur in such an area 51 on a typical spool.

FIG. 2 illustrates details of crossovers and layer stepbacks of the precision winding technique in accordance with the prior art. Winding 50 is composed of a number of wraps of filament 52 which are wound upon center post 54 of spool 56. Spool 56 features a pair of radially extending flanges 58 and 60 which define the longitudinal boundaries of winding 50. FIG. 2 shows a portion of winding 50 in a sectioned configuration to better illustrate the manner of winding of filaments 52. The first layer of filaments indicated by wraps numbers 1 through 13 is first laid onto the outer surface of spool 56 and generally defines a helix. As shown in FIG. 2, each of the turns advances a full pitch (distance of axial advancement per turn) in one step for each turn. The first layer of windings begins with turn number 1 and ends with turn number 13, whereupon the axial direction of advancement is reversed to form a second layer comprised of turns 14 through 21. The turns of the second layer also advance the full pitch distance in one step which results in filament 52 of the second layer crossing over turns of the first layer twice for each turn. At turn 21, the direction of advancement of filaments 52 is again reversed, thus forming the third layer comprising wraps 22 through 24. For winding 50, adjacent wraps of filament 52 are placed immediately proximate one another in touching or near touching relationship. This configuration will not maintain regular geometry if wound against a flat, radially extending flange. Consequently, each filament layer is stepped back several turns at its ends from the ends of the preceding filament layer to provide mechanical stability. This prior art technique, therefore, results in inefficient winding packing since it requires a spool having a longer axial length than would otherwise be necessary to store a given length of filament 52.

In operation, filament 52 would be payed out from winding 50 in the direction of the arrow in FIG. 2 such that the filament would be unwrapped from spool 56 in a reverse numerical order starting with wrap number 24 and ending at wrap number 1. Besides the poor volumetric efficiency mentioned above, another disadvantage associated with winding 50 is the amount of friction encountered when filament 52 is payed out. The outermost layer comprising turns 22 through 24 can be unwrapped easily; however, the second layer comprising turns 14 through 21 imposes greater drag upon filament payout. Such increased drag is attributable to the fact that each of the turns of the second layer must be displaced in an outward radial direction by an amount equal to its diameter in order to clear the adjacent turn.

FIG. 3 provides a partial cross-sectional view of winding 62 which is substantially identical to winding 50 shown in FIG. 1 except that pitch control grooves 64 are formed within spool 66. Grooves 64 establish the positioning of the base layer of filaments. FIG. 3 further illustrates a pitch spacing which accommodates slight variations in filament diameter by providing small gaps between adjacent filament turns.

Now with reference to FIG. 4, winding 80 in accordance with the present invention is shown which is referred to as a "deep nested" winding. To better illustrate the configuration of winding 80, several of the filament wraps are removed. Wrap numbers for the filament wraps removed from FIG. 4 are on the surface touching the associated wrap number. FIG. 4 shows spool 82 with permanent radially extending flange 84 installed at one end of center post 88 and temporary flange 86 located at the opposite end of the center post. Temporary flange 86 is used during filament winding and is later removed to permit filament payout. As shown in FIG. 4, a significant axial spacing is provided between adjacent turns of filament 52. This inventor has found that a pitch spacing, designated by letter "P" in FIG. 4, of about the square root of 3 (i.e. √3) times the diameter of filament 52 provides the desired winding geometry. A pitch distance of slightly less than this ideal spacing may be employed to accommodate minor variations in the diameter of filament 52. When winding filament 52 axially along center post 88, the filament wraps become deeply nested about halfway into the filaments of the underlying layer, thus providing good mechanical stability. This pitch distance also provides a geometry which enables winding against flat end flanges 84 and 86.

Pitch control grooves 90 are provided within center post 88 to establish the configuration of the base filament layer. Several turns of the layers of filaments of winding 80 are removed to better illustrate the interrelationships of the winding turns and layers. Pitch control grooves 90 provide for two steps of axial advancement of filament 52 for each turn of filament around spool 82. In the region of crossover of the second and subsequent layers over filaments of preceding layers, an intentional pairing is provided between adjacent wraps. For example, grooves 90 provided for wrap numbers 3 and 4 are intentionally in touching or near touching relationship when the turns advance axially, whereas a gap is provided between turn numbers 2 and 3, and turn numbers 4 and 5 where these turns advance. This inventor has discovered, quite unexpectedly, that once the pairing relationship is established in the base layer it occurs spontaneously in subsequent layers during automatic winding, thus providing regular winding geometry with minimal control or manual adjustment required to maintain the pairing. Filaments 52 advance axially to the full pitch distance in two equal steps spaced 180° from each other around a periphery of spool 80. Alternatively, however, the positions of the advancement steps may be located at relative positions other than 180°. Once winding 80 is fully developed, adhesives applied during winding or upon completion maintain the winding in the desired configuration when temporary flange 86 is removed.

As the wraps of filament 52 are payed out from winding 80 in the direction of the arrow in FIG. 4, the maximum amount of immediately required displacement of the filament in a radially outward direction is no more than one-half its diameter. This minimal requirement for filament displacement provides acceptable payout drag characteristics.

FIG. 5 illustrates a second embodiment of a winding 94 in which the pitch distance of filament wraps is slightly less than the ideal pitch of √3 times the filament diameter. This modified pitch spacing accommodates minor diameter variations in filament 52 yet provides the advantages associated with "deep nesting" the winding.

FIG. 6 illustrates a third embodiment of a deep nested winding according to this invention designated by reference number 102. For this embodiment, only a single wrapping flange 104 is provided, whereas the other axial end of the winding defines a staggered configuration. This design reflects a compromise between packing efficiency and coil stability for a deep nested winding according to this invention. The stepped back turns at one axial end of center post 107 of spool 105 enable the winding to be inherently stable such that the dependance on adhesives can be reduced.

While the above description constitutes the preferred embodiments of the present invention, it will be appreciated that the invention is susceptible to modification, variation and change without departing from the proper scope and fair meaning of the accompanying claims. It should also be recognized that the deep-nesting winding technique can be used in any winding application where dense, regular packing against flanges is desirable. This can include products from small electrical inductors to large cable drums.

## Claims

1. A spool (82) for a filament (52) comprising:
a center post (88);
a first flange (84) disposed at one end of the center post (88) and projecting radially therefrom; and
a groove (90) having an overall pitch along the center post (88) approximately equal to the diameter of the filament (52) times the square root of three and including at least two discrete steps for each filament turn such that the pitch is provided in discrete steps about the periphery of the center post (88), each such step being paired axially along the center post (88) and disposed such that the steps of each pair are proximate each other and adjacent pairs are spaced apart;
said spool being characterised in that there is provided: a second radially extending removable flange (86) axially spaced from said first flange (84)

2. A filament winding assembly (80) of a type enabling filament (52) to be withdrawn axially with respect to said winding, comprising:
a spool (82) according to claim 1; and
filament (52) wrapped onto said center post (88) by wrapping said filament (52) onto said spool (82) such that said filament (52) advances axially with respect to said center post (88) for each wrap which provides a total pitch distance of approximately √3 times the diameter of said filament (52), said filament (52) advancing axially in a first axial direction and then reversing to advance in a second axial direction, said wrapping continuing by alternately reversing the direction of axial advancement of said filaments (52) to define a plurality of filament layers, said layers of said filaments (52) having filament segments which contact said first flange (84) and filament segments which contact said second flange (86).

3. A filament winding assembly (80) according to claim 2 wherein said axial advancement of said filament (52) with respect to said center post (88) occurs in two equal steps.

4. A filament winding assembly (80) according to claim 3 wherein said steps of equal axial advancement of said filament (52) along said spool center post (88) occur at positions 180° apart with respect to said spool center post (88).

5. A filament winding assembly (80) according to claim 2 wherein said winding defines a tapered axial end by reducing the number of turns of said filament (52) of the layers on said spool (82) as layers are developed in a radially outward direction.

6. A method of forming a winding of filament (52) comprising the steps of:
providing a spool (82) according to claim 1;
wrapping said filament (52) onto said spool center post (88) such that said filament (52) advances axially with respect to said center post to provide a total pitch distance of approximately √3 times the diameter of said filament (52), said filament (52) advancing axially in a first axial direction with respect to said center post (88) and then reversing to advance in a second axial direction with respect to said center post (88), said wrapping step continuing by alternately reversing the axial advancement of said filament (52) to define a plurality of filament layers, said layers of said filaments (52) having filament segments which contact said first flange (84) and filament segments which contact said second flange (86); removing said second flange (86), thereby enabling said filament (52) to be payed out when pulled axially with respect to said winding.

7. A method of forming a winding of filament (52) according to claim 6 wherein said filament (52) advances with respect to said center post (88) in two equal steps to provide said total pitch distance.

8. A method of forming a winding of filament (52) according to claim 7 wherein said steps of equal axial advancement of said filament (52) with respect to said spool center post (88) occur at positions 180° apart with respect to said spool center post (88).

9. A method of forming a winding of filament (52) according to claim 6 further comprising the step of coating said filament (52) with an adhesive, thereby enhancing the mechanical stability of said winding.

10. A method of forming a winding of filament (52) according to claim 6 wherein at least one axial end of said winding has a tapered configuration by reducing the number of turns of said filament (52) of the layers on said spool (82) as layers are developed in a radially outward direction.

11. A method of forming a winding of filament (52) according to claim 6 wherein said axial advancement of said filament (52) with respect to said spool center post (88) defines a crossover region and adjacent filament segments in said crossover region are alternately forced together and forced apart to define separated pairs of filament segments.

## Patentansprüche

1. Eine Spule (82) für einen Faden (52) mit:
einem Kernmantel (88);
einem ersten Flansch (84), der an einem Ende des Kernmantels (88) angeordnet ist und radial hiervon vorsteht; und
einer Kerbe (90), welche entlang des Kernmantels (88) eine gleichmäßige Steigung annähernd gleich dem Durchmesser des Fadens (52) mal der Quadratwurzel von 3 hat und wenigstens zwei voneinander getrennte Schritte für jede Fadenwicklung derart hat, daß die Steigung in getrennten Schritten entlang des Umfanges des Kernmantels (88) vorgesehen ist, wobei jeder dieser Schritte axial entlang des Kernmantels (88) gepaart ist und so angeordnet ist, daß die Schritte eines jeden Paares einander nahe sind und von benachbarten Paaren voneinander beabstandet sind,
wobei die Spule dadurch gekennzeichnet ist, daß
ein zweiter sich radial erstreckender entfernbarer Flansch (86) axial beabstandet von dem ersten Flansch (84) vorgesehen ist.

2. Eine Fadenwicklungsanordnung (80) des Typs, der es einem Faden (52) ermöglicht, axial bezüglich der Wicklung abgezogen zu werden, mit:
einer Spule (82) nach Anspruch 1;
einem Faden (52), der auf den Kernmantel (88) dadurch gewickelt ist, daß der Faden (52) auf die Spule (82) so gewickelt wird, daß der Faden (52) axial gegenüber dem Kernmantel (88) für jeden Schlag fortschreitet, was einen Gesamtsteigungsabstand von annähernd √3 mal Durchmesser des Fadens (52) erzeugt, wobei der Faden (52) axial in einer ersten axialen Richtung fortschreitet und dann umkehrt, um in einer zweiten axialen Richtung fortzuschreiten, wobei das Wickeln fortgeführt wird durch abwechselndes Umkehren der Richtung des axialen Fortschreitens des Fadens (52), um eine Mehrzahl von Fadenlagen zu definieren, wobei die Lagen des Fadens (52) Fadensegmente in Kontakt mit dem ersten Flansch (84) und Fadensegmente in Kontakt mit dem zweiten Flansch (86) haben.

3. Eine Fadenwicklungsanordnung (80) nach Anspruch 2, wobei das axiale Fortschreiten des Fadens (52) bezüglich des Kernmantels (88) in zwei gleichen Schritten erfolgt.

4. Eine Fadenwicklungsanordnung (80) nach Anspruch 3, wobei die Schritte des gleichen axialen Fortschreitens des Fadens (52) entlang des Kernmantels (88) der Spule an Positionen auftreten, die bezüglich des Kernmantels (88) der Spule um 180° beabstandet sind.

5. Eine Fadenwicklungsanordnung (80) nach Anspruch 2, wobei die Wicklung ein sich verjüngendes axiales Ende definiert, indem die Anzahl von Windungen des Fadens (52) in den Lagen auf der Spule (82) verringert wird, wenn die Lagen in radial nach außen gerichteter Richtung aufgebaut werden.

6. Ein Verfahren zum Bilden einer Wicklung eines Fadens (52) mit den folgenden Schritten:
Bereitstellen einer Spule (82) nach Anspruch 1;
Wickeln des Fadens (52) auf den Kernmantel (88) der Spule so, daß der Faden (52) axial gegenüber dem Kernmantel fortschreitet, um einen Gesamt-Steigungsabstand von annähernd √3 mal dem Durchmesser des Fadens (52) zu erzeugen, wobei der Faden (52) axial in einer ersten axialen Richtung gegenüber dem Kernmantel (88) fortschreitet und dann umkehrt, um in einer zweiten axialen Richtung gegenüber dem Kernmantel (88) fortzuschreiten, wobei der Wicklungsschritt fortgeführt wird durch abwechselndes Umkehren des axialen Fortschreitens des Fadens (52), um eine Mehrzahl von Fadenlagen zu definieren, wobei die Lagen des Fadens (52) Fadensegmente in Kontakt mit dem ersten Flansch (84) und Fadensegmente in Kontakt mit dem zweiten Flansch (86) haben;
Entfernen des zweiten Flansches (86), wodurch es dem Faden (52) ermöglicht wird, abgespult zu werden, wenn er axial gegenüber der Wicklung abgezogen wird.

7. Ein Verfahren zum Bilden einer Wicklung eines Fadens (52) nach Anspruch 6, wobei der Faden (52) gegenüber dem Kernmantel (88) in zwei gleichen Schritten fortschreitet, um den Gesamt-Steigungsabstand zu erzeugen.

8. Ein Verfahren zum Bilden einer Wicklung eines Fadens (52) nach Anspruch 7, wobei die Schritte des gleichen axialen Fortschreitens des Fadens (52) gegenüber dem Kernmantel (88) der Spule an Positionen auftreten, die gegenüber dem Kernmantel (88) der Spule um 180° beabstandet sind.

9. Ein Verfahren zum Bilden einer Wicklung eines Fadens (52) nach Anspruch 6, weiterhin mit dem Schritt des Beschichtens des Fadens (52) mit einem Klebstoff, wodurch die mechanische Stabilität der Wicklung verbessert wird.

10. Ein Verfahren zum Bilden einer Wicklung eines Fadens (52) nach Anspruch 6, wobei wenigstens ein axiales Ende der Wicklung eine sich verjüngende Formgebung dadurch hat, daß die Anzahl von Windungen des Fadens (52) in den Lagen auf der Spule (82) verringert werden, wenn die Lagen in einer radial nach außen verlaufenden Richtung aufgebaut werden.

11. Ein Verfahren zum Bilden einer Wicklung eines Fadens (52) nach Anspruch 6, wobei das axiale Fortschreiten des Fadens (52) gegenüber dem Kernmantel (88) in der Spule einen Überkreuzungsbereich definiert und wobei einander benachbarte Fadensegmente in dem Überkreuzungsbereich abwechselnd zusammengezwungen und auseinandergezwungen werden, um getrennte Paare von Fadensegmenten zu definieren.

## Revendications

1. Bobine (82) pour filament (52), comprenant :
un cylindre central (88) ;
un premier rebord (84) disposé à une extrémité du cylindre central (88) et saillant radialement sur ce dernier ; et
une rainure (90) ayant le long du cylindre central (88) un pas global approximativement égal au diamètre du filament (52) fois la racine carrée de trois et comprenant au moins deux étages distincts pour chaque spire de filament de façon que le pas soit réalisé en étages distincts autour de la périphérie du cylindre central (88), chacun desdits étages étant réuni en groupes de deux axialement le long du cylindre central (88) et disposé de façon que les étages de chaque groupe de deux soient voisins l'un de l'autre et que les groupes voisins de deux soient distants l'un de l'autre ;
ladite bobine étant caractérisée en ce qu'elle est équipée d'un second rebord amovible (86) orienté radialement et distant axialement dudit premier rebord (84).

2. Ensemble (80) d'enroulement d'un filament d'un type permettant au filament (52) d'être extrait axialement par rapport audit enroulement, comprenant :
une bobine (82) selon la revendication 1 ; et
un filament (52) enroulé sur ledit cylindre central (88) par enroulement dudit filament (52) sur ladite bobine (82) de façon que ledit filament (52) avance axialement par rapport audit cylindre central (88) pour chaque enroulement qui provoque une distance totale de pas d'environ √3 fois le diamètre dudit filament (52), ledit filament (52) avançant axialement dans un premier sens axial et ensuite revenant en arrière pour avancer dans un second sens axial, ledit enroulement se poursuivant par inversion en alternance du sens de l'avance axiale dudit filament (52) pour constituer de multiples couches de filament, lesdites couches dudit filament (52) ayant des segments de filament qui entrent en contact avec ledit premier rebord (84) et des segments de filament qui entrent en contact avec ledit second rebord (86).

3. Ensemble d'enroulement d'un filament (80) selon la revendication 2, dans lequel ladite avance axiale dudit filament (52) par rapport audit cylindre central (88) s'effectue en deux étages égaux.

4. Ensemble d'enroulement d'un filament (80) selon la revendication 3, dans lequel lesdits étages d'avance axiale égale dudit filament (52) le long dudit cylindre central (88) apparaissent en des positions qui sont distantes de 180° par rapport audit cylindre central (88) de la bobine.

5. Ensemble d'enroulement d'un filament (80) selon la revendication 2, dans lequel ledit enroulement forme une extrémité axiale se rétrécissant en cône par réduction du nombre de spires dudit filament (52) des couches placées sur ladite bobine (82) lorsque les couches s'amoncellent dans le sens allant radialement vers l'extérieur.

6. Procédé de formation d'un enroulement de filament (52), comprenant les étapes :
d'utilisation d'une bobine (82) selon la revendication 1 ;
d'enroulement dudit filament (52) sur ledit cylindre central (88) de la bobine de façon que ledit filament (52) avance axialement par rapport audit cylindre central de manière à ménager une distance totale de pas d'environ √3 fois le diamètre dudit filament (52), ledit filament (52) avançant axialement dans un premier sens axial par rapport audit cylindre central (88) et ensuite revenant en arrière pour avancer dans un second sens axial par rapport audit cylindre central (88), ladite étape d'enroulement se poursuivant par inversion en alternance de l'avance axiale dudit filament (52) de manière à constituer de multiples couches de filament, lesdites couches dudit filament (52) ayant des segments de filament qui entrent en contact avec ledit premier rebord (84) et des segments de filament qui entrent en contact avec ledit second rebord (86) ;
d'enlèvement dudit second rebord (86) de manière à permettre audit filament (52) d'être déroulé lorsqu'il est tiré axialement par rapport audit enroulement.

7. Procédé de formation d'un enroulement de filament (52) selon la revendication 6, suivant lequel ledit filament (52) avance par rapport audit cylindre central (88) en deux étages égaux pour ménager ladite distance totale de pas.

8. Procédé de formation d'un enroulement de filament (52) selon la revendication 7, suivant lequel lesdits étages d'avance axiale égale dudit filament (52) par rapport audit cylindre central (88) de la bobine se produisent en des emplacements qui sont distants de 180° par rapport audit cylindre central (88) de la bobine.

9. Procédé de formation d'un enroulement de filament (52) selon la revendication 6, comprenant par ailleurs l'étape de revêtement dudit filament (52) par un adhésif afin d'améliorer ainsi la stabilité mécanique dudit enroulement.

10. Procédé de formation d'un enroulement de filament (52) selon la revendication 6, suivant lequel au moins une extrémité axiale dudit enroulement a une forme se rétrécissant en cône par réduction du nombre de spires dudit filament (52) des couches placées sur ladite bobine (82) pendant que les couches s'amoncellent dans le sens allant radialement vers l'extérieur.

11. Procédé de formation d'un enroulement de filament (52) selon la revendication 6, suivant lequel ladite avance axiale dudit filament (52) par rapport audit cylindre central (88) de la bobine produit une région de croisement et les segments voisins de filament situés dans ladite région de croisement sont en alternance resserrés les uns contre les autres et écartés les uns des autres de manière à constituer des groupes séparés de deux segments de filament.
